# EUROPÄISCHE PATENTSCHRIFT

(11) **EP 4 151 909 B1**
(45) Veröffentlichungstag und Bekanntmachung des Hinweises auf die Patenterteilung: **12.02.2025**
(21) Anmeldenummer: 22196094.1
(22) Anmeldetag: 16.09.2022
(51) Int. Cl.: F24C 15/20

(54) **KOCHFELDMODUL**
COOKTOP MODULE
MODULE DE TABLE DE CUISSON

(30) Priorität: 17.09.2021 DE 202021105043 U; 11.10.2021 DE 202021105496 U
(43) Veröffentlichungstag der Anmeldung: 22.03.2023
(73) Patentinhaber: SILVERLINE Endüstri ve Ticaret A.S., 05300 Amasya (TR)
(72) Erfinder: Zafer, Çarpan, Etimesgut/Ankara (TR); Burak, Yetgin, 34030 Bayrmpasa/Istanbul (TR)
(74) Vertreter: Mutlu, Aydin

(56) Entgegenhaltungen:
- EP-A1- 3 722 678
- EP-A1- 3 789 680
- WO-A1-2019/081271
- WO-A1-2019/081274
- WO-A1-2019/138312
- US-A1- 2021 156 569

## Beschreibung

Die vorliegende Erfindung betrifft ein Kochfeldmodul mit einem Gehäuse, einer an der Oberseite des Gehäuses vorgesehenen Stellplatte und einer Dunstabzugsvorrichtung mit einem Gebläse, um beim Kochen entstehende Dünste und Wrasen von der Oberseite der Stellplatte nach unten in einer Strömungsrichtung abzusaugen, wobei in dem Gehäuse eine Lufteinströmkammer ausgebildet ist, welche von außen durch eine in der Stellplatte vorgesehene Lufteintrittsöffnung zugänglich ist und das Gebläse der Lufteinströmkammer nachgeordnet in dem Gehäuse untergebracht ist, wobei die Dunstabzugsvorrichtung eine Halterung für einen Fettfilter Strömungsrichtung vor dem Gebläse aufweist und Befestigungsmittel zur Anbringung eines Geruchsfilters umfasst, und wobei die Befestigungsmittel für den Geruchsfilter in Strömungsrichtung betrachtet zwischen der Halterung für den Fettfilter und dem Gebläse in dem Gehäuse vorgesehen sind.

Kochfeldmodule dieser Art mit einer integrierten Mulden-Dunstabzugsvorrichtung, durch welche beim Kochen entstehende Dünste und Wrasen von der Oberseite der eigentlichen Kochplatte/Stellplatte der Kochvorrichtung nach unten abgesaugt werden, sind bekannt. So offenbart beispielsweise die EP 3 505 830 B1 ein Kochfeldmodul mit einem Gehäuse, an dessen Oberseite ein Kochfeld mit einer Kochfläche bzw. einer Stellplatte vorgesehen ist. Das Kochfeld selbst besitzt einen Rahmen, in welchem die Technik für das Kochfeld untergebracht ist. Das Kochfeldmodul weist weiterhin eine Mulden- bzw. Downdraft-Dunstabzugsvorrichtung auf, um beim Kochen entstehende Dünste und Wrasen von der Oberseite der Kochplatte nach unten abzusaugen und zu reinigen. Hierzu ist in der Kochplatte eine Lufteintrittsöffnung vorgesehen, durch welche zu reinigende Luft nach unten in eine in dem Gehäuse vorgesehene Lufteinströmkammer gesaugt wird. Im Bereich der Lufteintrittsöffnung ist ein Fettfilter vorgesehen, der in die Lufteintrittsöffnung gehängt ist und in den Bereich der Lufteinströmkammer ragt. Die Dunstabzugsvorrichtung umfasst ferner ein Gebläse, welches dem Fettfilter nachgeordnet ist, und einen Geruchsfilter, der in Strömungsrichtung betrachtet hinter dem Gebläse angeordnet ist. Dabei ist die Anordnung so getroffen, dass der Geruchsfilter von der Lufteinströmkammer aus zugänglich ist, sodass der Luftfilter durch die Lufteinströmkammer eingesetzt wird. Wegen des beschränkten Platzes ist das Auswechseln des Geruchsfilters jedoch zum Teil schwierig. Aus der WO 2019/081271 A1 und WO 2017/081274 A1 sind ebenfalls solche Kochfeldmodule vorbekannt. Die US 2021/0156569 A1 offenbart ein Kochfeldmodul bei dem die Fettfilter und Geruchsfilter in das Gehäuse von dessen Rückseite her eingebracht werden.

Von daher liegt der vorliegenden Erfindung die Aufgabe zugrunde, dass ein einfaches Auswechseln des Geruchsfilters ermöglicht.

Die Aufgabe ist bei einem Kochfeldmodul der eingangs genannten Art dadurch gelöst, dass die Befestigungsmittel für den Geruchsfilter eine Aufnahme aufweisen, die von einer Vorderseite des Kochfeldmoduls her zugänglich ist und in die einen Geruchsfilter von der Vorderseite des Kochfeldmoduls her einschiebbar ist, und dass die Aufnahme von der Vorderseite des Kochmoduls zugänglich ist und die eine nach unten weisende Einsetzöffnung aufweist, in die ein Geruchsfilter von der Vorderseite des Kochfeldmoduls her von unten nach oben schiebend eingebracht werden kann. Dabei kann die Aufnahme für den Geruchsfilter auf ihrer Oberseite und/oder Unterseite geschlossen ausgebildet sein.

Die Seitenflächen der Aufnahmen können durch gitterartige Haltemittel verschlossen sein, zwischen denen Durchströmöffnungen gebildet sind.

Diese Ausgestaltung kombiniert einen sicheren Halt und eine optimale Positionierung bei gleichzeitig guter Durchströmbarkeit des Geruchsfilters.

Bei diesen Ausgestaltungen ist die Aufnahme für Geruchsfilter von außen zugänglich, nämlich von der Vorderseite des Kochfeldmoduls her, wodurch ein besonders einfacher Austausch gewährleistet wird.

Schließlich ist gemäß einer Ausführungsform der Erfindung vorgesehen, dass am Boden der Lufteinströmkammer eine Flüssigkeitssammelwanne vorgesehen ist, die von der Vorderseite des Kochfeldes her in das Gehäuse eingeschoben ist.

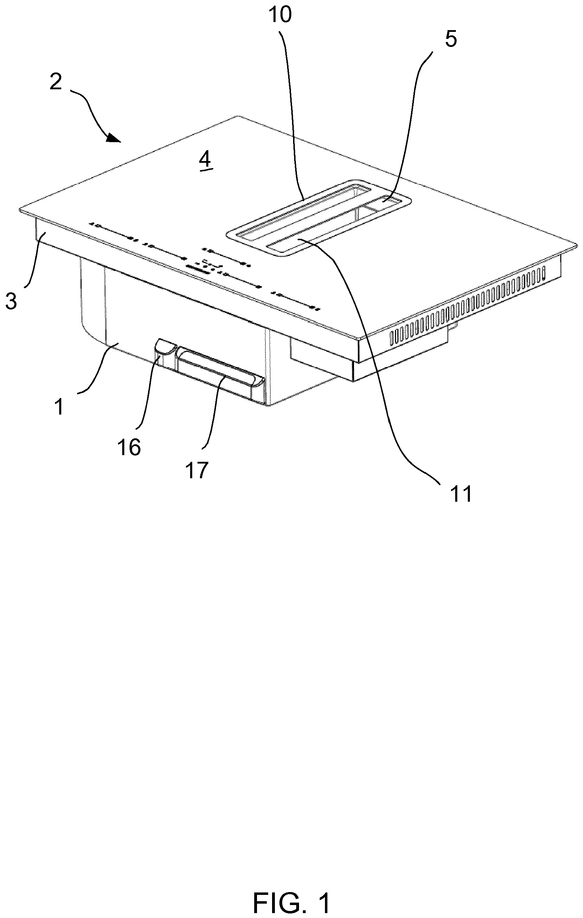

Nachfolgend wird ein Ausführungsbeispiel eines erfindungsgemäßen Kochfeldmoduls anhand der beiliegenden Zeichnung erläutert. In der Zeichnung zeigt
- Figur 1: ein Ausführungsbeispiel eines Kochfeldmoduls gemäß der vor liegenden Erfindung in perspektivischer Ansicht von schräg vorne,
- Figur 2: das Kochfeldmodul aus Figur 1 mit abgenommenen Kochfeld in perspektivischer Ansicht,

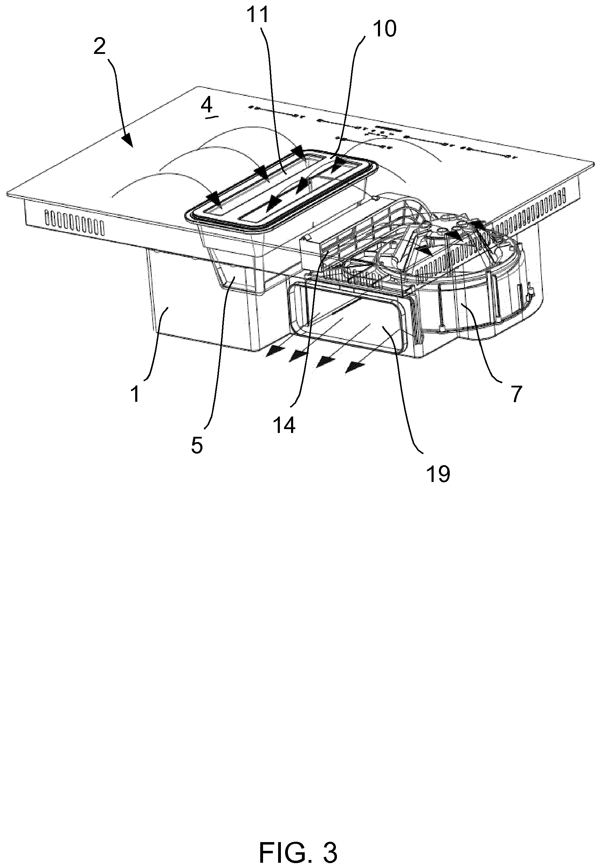

- Figur 3: das Kochfeldmodul aus Figur 1 in perspektivischer Ansicht von schräg hinten,

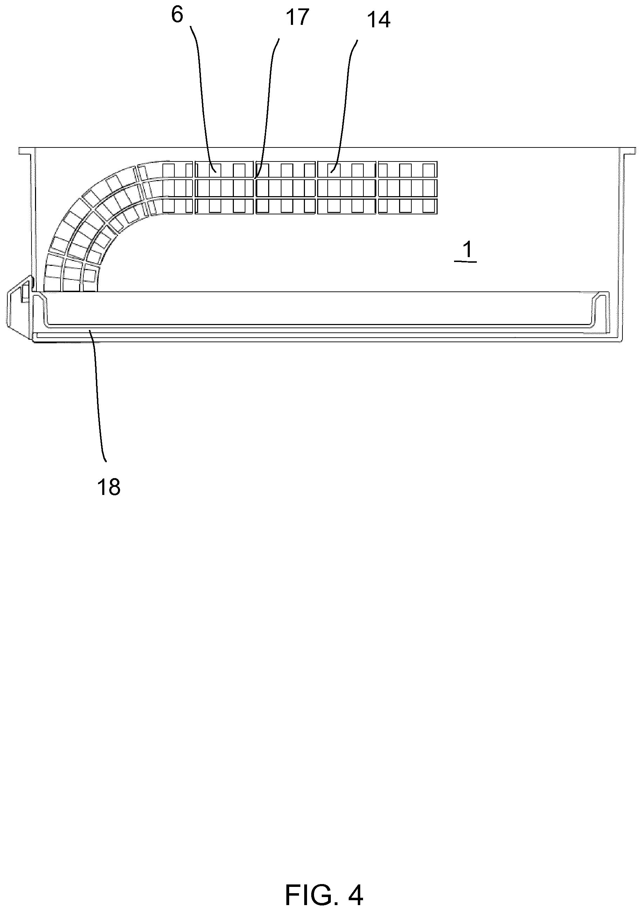

- Figur 4: das Kochfeldmodul aus Figur 1 in einer geschnittenen Seitenansicht und

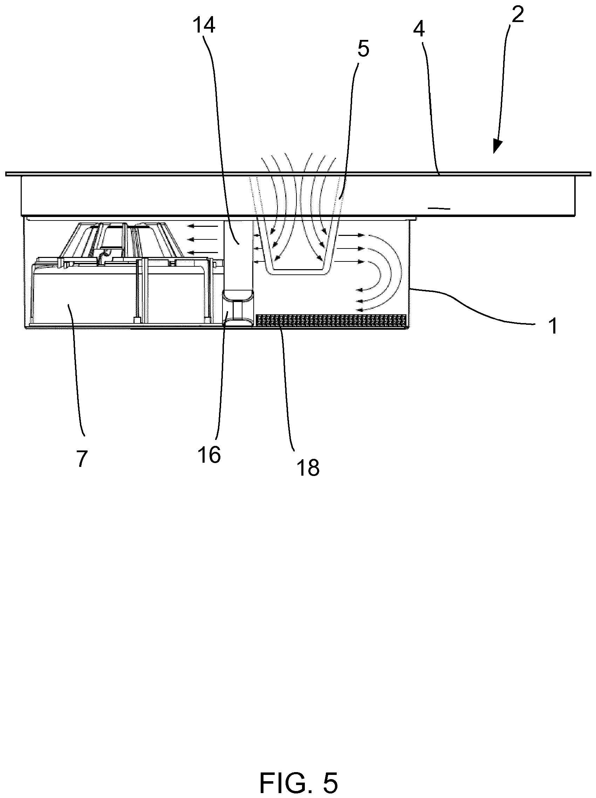

- Figur 5: das Kochfeldmodul aus Figur 1 in einer geschnittenen Vorderansicht.

In der Zeichnung ist ein Kochfeldmodul gemäß der folgenden Erfindung dargestellt. Das Kochfeldmodel umfasst ein Gehäuse 1 und ein Kochfeld 2, welches an der offenen Oberseite des Gehäuses 1 befestigt ist. Das Kochfeld 2 besitzt einen Rahmen 3, an dessen Oberseite eine Stellplatte 4, beispielsweise aus Glaskeramik, vorgesehen ist und auf der welcher Töpfe, Pfannen etc. zum Kochen platziert werden können. Der Rahmen 3 ist an der Unterseite geschlossen und dient dazu, die Technik des Kochfeldes 2 aufzunehmen.

Das Kochfeldmodul umfasst ferner eine Dunstabzugsvorrichutung, welche als Mulden- oder Downdraft-Abzug ausgebildet ist und dazu dient, beim Kochen entstehende Dünste und Wrasen von der Oberseite der Stellfläche 4 her nach unten abzusaugen und zu reinigen. Die Dunstabzugsvorrichtung ist im Wesentlichen in dem Gehäuse 1 untergebracht und umfasst einen Fettfilter 5, einen Geruchsfilter 6 und ein Gebläse 7, die in dieser Reihenfolge hintereinanderliegend in einer Strömungsrichtung der Dunstabzugsvorrichtung angeordnet sind. Konkret ist in dem Gehäuse 1 eine Lufteintrittskammer 8 ausgebildet, die zu ihrer Oberseite hin offen ist. Hierzu ist in der Stellplatte 4 zwischen den eigentlichen Kochbereichen des Kochfeldes 2 eine zentrale Lufteintrittsöffnung 9 vorgesehen. Die Lufteintrittsöffnung 9 wird durch einen Rand begrenzt, der einen Haltesteg bildet, über welchen der Fettfilter 5 durch die Lufteintrittsöffnung 9 in die Lufteintrittskammer 8 eingehängt ist. Auf die Oberseite des Fettfilters 5 ist eine Abdeckplatte 10 gelegt, in welcher Luftschlitze 11 ausgebildet sind.

Die Lufteintrittskammer 8 ist mit einer Gebläsekammer 12 des Gehäuses 1, in welcher das Gebläse 7 untergebracht ist, über eine Verbindungsöffnung 13 verbunden, die sich entlang des oberen Rands des Gehäuses 1 erstreckt. Im Bereich dieser Verbindungsöffnung 13 ist der Geruchsfilter 6 vorgesehen, um einen Luftstrom vor dessen Eintritt in die Gebläsekammer 12 von Geruchsstoffen zu befreien. Zur Fixierung des Geruchsfilters 6 ist eine Aufnahme 14 vorgesehen, die von der Vorderseite des Kochfeldmoduls her zugänglich ist und eine nach unten weisende Einschuböffnung 15 aufweist, durch welche der Geruchsfilter 6 von unten in die Aufnahme 14 eingeschoben werden kann.

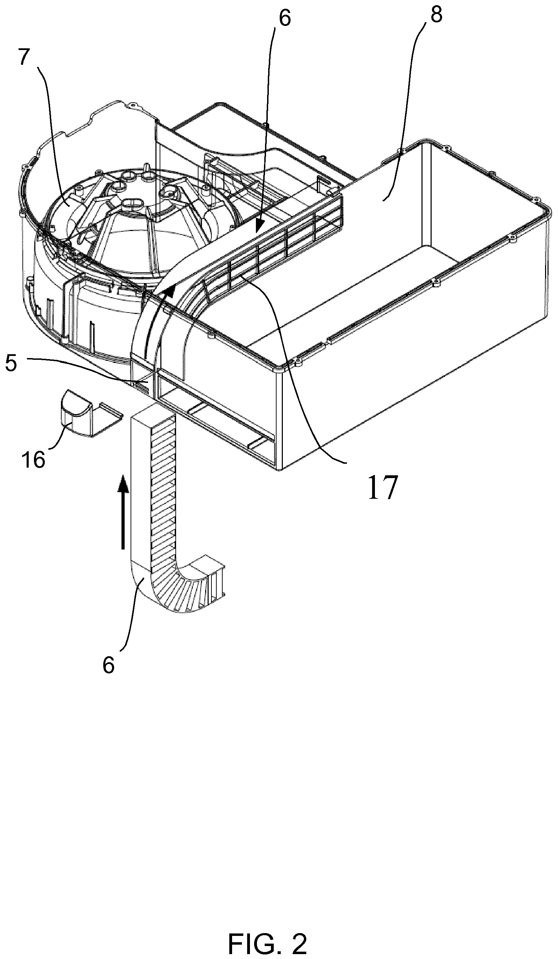

In der Figur 2 ist gut erkennbar, dass die Aufnahme 14 einen etwa L-förmigen Querschnitt besitzt, wobei der lange L-Steg parallel zu der Gehäuseoberseite verläuft und der kurze L-Steg gekrümmt ist, um das Einschieben des Geruchsfilters 6 zu vereinfachen. Die Einschuböffnung 15 ist durch einen am Gehäuse 1 lösbar angebrachten Deckel 16 verschlossen.

Die Aufnahme 14 ist an ihrer Oberseite und an ihrer Unterseite geschlossen ausgebildet, an ihrem zu der Lufteintrittskammer 8 und der Gebläsekammer 12 weisenden Seitenflächen jedoch nur durch gitterartige Haltemittel 17 verschlossen, welche Durchtrittöffnungen für die zu reinigende Luft definieren.

Am Boden der Lufteintrittskammer 8 ist eine Auffangschale 18 für Flüssigkeiten, die in das Gehäuse 1 eintreten, vorgesehen. Die Auffangschale 18 ist in Form einer Schublade ausgebildet, welche von der Vorderseite des Kochfeldmoduls her in die Lufteintrittskammer 8 des Gehäuses 1 eingeschoben ist.

Im Betrieb wird zu reinigende Luft über das Gebläse 7 durch die Lufteintrittsöffnung 9 die Lufteintrittskammer 8 des Gehäuses 1 gesaugt, wobei der Fettfilters aus dem Luftstrom Feststoffe entfernt. Miteintretende Flüssigkeiten sammeln sich in der Auffangschale 18. Die so vorgereinigte Luft wird in die Gebläsekammer 12 gesaugt, wobei sie den Geruchsfilter 6 durchströmt und dort von Geruchsstoffen befreit wird, bevor die gereinigte Luft durch eine Luftauslassöffnung 19 an der Rückseite der Gebläsekammer 12 wieder aus dem Gehäuse 1 geblasen wird.

Der Fettfilter 5 kann auf einfache Weise gereinigt werden, indem die Abdeckplatte 10 entfernt und der Fettfilter 5 nach oben durch die Lufteintrittsöffnung 9 aus dem Kochmodul entfernt wird. Ebenso kann die Auffangschale 18 zum Reinigen aus dem Gehäuse 1 gezogen werden.

Ist ein Reinigen des Geruchsfilters 6 erforderlich, wird der Deckel 16 entfernt und der Geruchsfilter 6 nach unten aus der Aufnahme 14 gezogen.

### Bezugszeichenliste

- 1: Gehäuse
- 2: Kochfeld
- 3: Rahmen
- 4: Stellplatte
- 5: Fettfilter
- 6: Geruchsfilter
- 7: Gebläse
- 8: Lufteintrittskammer
- 9: Lufteintrittsöffnung
- 10: Abdeckplatte
- 11: Luftschlitz
- 12: Gebläsekammer
- 13: Verbindungsöffnung
- 14: Aufnahme
- 15: Einschuböffnung
- 16: Deckel
- 17: Haltemittel
- 18: Auffangschale
- 19: Luftauslassöffnung

## Patentansprüche

1. Kochfeldmodul mit einem Gehäuse (1), einer an der Oberseite des Gehäuses (1) vorgesehenen Stellplatte (4) und einer Dunstabzugsvorrichtung mit einem Gebläse (7), um beim Kochen entstehende Dünste und Wrasen von der Oberseite der Stellplatte (4) nach unten in einer Strömungsrichtung abzusaugen, wobei in dem Gehäuse (1) eine Lufteinströmkammer ausgebildet ist, welche von außen durch eine in der Stellplatte (4) vorgesehene Lufteintrittsöffnung zugänglich ist und das Gebläse (7) der Lufteintrittskammer (8) nachgeordnet in dem Gehäuse (1) untergebracht ist, wobei die Dunstabzugsvorrichtung eine Halterung für einen Fettfilter (5) in Strömungsrichtung vor dem Gebläse (7) aufweist und Befestigungsmittel zur Anbringung eines Geruchsfilters (6) umfasst, und wobei die Befestigungsmittel für den Geruchsfilter (6) in Strömungsrichtung betrachtet zwischen der Halterung für den Fettfilter (5) und dem Gebläse (7) in dem Gehäuse (1) vorgesehen sind, **dadurch gekennzeichnet, dass** die Befestigungsmittel für den Geruchsfilter (6) eine Aufnahme (14) aufweisen, die von einer Vorderseite des Kochfeldmoduls her zugänglich ist und in die ein Geruchsfilter (6) von der Vorderseite des Kochfeldmoduls her einschiebbar ist, und dass die Aufnahme (14) von der Vorderseite des Kochfeldmoduls zugänglich ist und eine nach unten weisende Einschuböffnung (15) aufweist, in die ein Geruchsfilter (6) von der Vorderseite des Kochfeldmoduls her von unten nach oben schiebend eingebracht werden kann.

2. Kochfeldmodul nach Anspruch 1, **dadurch gekennzeichnet, dass** die Aufnahme (14) für den Geruchsfilter (6) an ihrer Oberseite und/oder Unterseite geschlossen ist.

3. Kochfeldmodul nach einem der vorherigen Ansprüche, **dadurch gekennzeichnet, dass** die Seitenflächen der Aufnahme (14) durch gitterartige Haltemittel (17) verschlossen sind, zwischen denen Durchströmöffnungen gebildet sind.

4. Kochfeldmodul nach einem der vorherigen Ansprüche, **dadurch gekennzeichnet, dass** am Boden der Lufteinströmkammer eine Auffangschale (18) vorgesehen ist, die von der Vorderseite des Kochfeldes (2) her in das Gehäuse (1) eingeschoben ist.

## Claims

1. Hob module with a housing (1), a setting plate (4) provided on the upper side of the housing (1) and a vapor extractor device with a fan (7) in order to suck away hazes and vapors produced during cooking from the upper side of the setting plate (4) downwards in a flow direction, wherein an air inflow chamber is formed in the housing (1), which air inflow chamber is accessible from the outside through an air inlet opening provided in the setting plate (4) and wherein the fan (7) is accommodated in the housing (1) downstream of the air inlet chamber (8), wherein the extractor device has a holder for a grease filter (5) in front of the fan (7) in the flow direction and comprises fastening means for attaching an odour filter (6), and wherein the fastening means for the odour filter (6) are provided between the holder for the grease filter (5) and the fan (7) in the housing (1) as viewed in the flow direction, **characterized in that** the fastening means for the odour filter (6) have a receptacle (14) which is accessible from a front side of the hob module and into which an odour filter (6) can be inserted from the front side of the hob module, and **in that** the receptacle (14) is accessible from the front side of the hob module and has a downwardly pointing insertion opening (15) into which an odour filter (6) can be inserted from the front side of the hob module by sliding it upwards from below.

2. Hob module according to claim 1, **characterized in that** the receptacle (14) for the odour filter (6) is closed on its upper side and/or lower side.

3. Hob module according to one of the preceding claims, **characterized in that** the side surfaces of the receptacle (14) are closed by grid-like holding means (17), between which through-flow openings are formed.

4. Hob module according to one of the preceding claims, **characterized in that** a collecting tray (18), which is inserted into the housing (1) from the front side of the hob (2), is provided on the base of the air inflow chamber.

## Revendications

1. Module de table de cuisson comprenant un boîtier (1), une plaque de pose (4), prévue sur la face supérieure du boîtier (1), et un dispositif d'aspiration des vapeurs doté d'un ventilateur (7) destiné à aspirer les vapeurs et buées produites lors de la cuisson, depuis la face supérieure de la plaque de pose (4) vers le bas, dans une direction d'écoulement, sachant que dans le boîtier (1), il est prévu une chambre d'afflux d'air qui est accessible de l'extérieur à travers une ouverture d'entrée d'air prévue dans la plaque de pose (4), et le ventilateur (7) est installé dans le boîtier (1), en aval de la chambre d'entrée d'air (8), le dispositif d'aspiration des vapeurs présentant un support pour un filtre à graisses (5), en amont du ventilateur (7) vu dans le sens de l'écoulement, et des moyens de fixation pour le montage d'un filtre anti-odeurs (6), et les moyens de fixation pour le filtre anti-odeurs (6) étant prévus dans le boîtier (1), entre le support pour le filtre à graisses (5) et le ventilateur (7), vu dans le sens de l'écoulement, **caractérisé en ce que** les moyens de fixation pour le filtre anti-odeurs (6) présentent un logement (14) qui est accessible depuis une face avant du module de table de cuisson et dans lequel un filtre anti-odeurs (6) peut être inséré depuis la face avant du module de table de cuisson, et **en ce que** le logement (14) est accessible depuis la face avant du module de table de cuisson et présente une ouverture d'insertion (15) qui est dirigée vers le bas et dans laquelle un filtre anti-odeurs (6) peut être glissé de bas en haut, depuis la face avant du module de table de cuisson.

2. Module de table de cuisson selon la revendication 1, **caractérisé en ce que** le logement (14) pour le filtre anti-odeurs (6) est fermé sur sa face supérieure et/ou sur sa face inférieure.

3. Module de table de cuisson selon une des revendications précédentes, **caractérisé en ce que** les faces latérales du logement (14) sont fermées par des moyens de support (17) en forme de grilles, entre lesquels sont formées des ouvertures de passage d'écoulement.

4. Module de table de cuisson selon une des revendications précédentes, **caractérisé en ce que** sur le fond de la chambre d'afflux d'air, il est prévu un bac de récupération (18) qui est glissé dans le boîtier (1) depuis la face avant du module de table de cuisson.
